(19) Europäisches Patentamt
European Patent Office
Office européen des brevets

(11) EP 3 239 208 A1

(12) **EUROPEAN PATENT APPLICATION**
published in accordance with Art. 153(4) EPC

(43) Date of publication:
**01.11.2017 Bulletin 2017/44**

(21) Application number: **15869847.2**

(22) Date of filing: **08.12.2015**

(51) Int Cl.:
***C08G 63/12*** *(2006.01)* ***C09K 8/12*** *(2006.01)*
***E21B 43/34*** *(2006.01)*

(86) International application number:
**PCT/JP2015/084392**

(87) International publication number:
**WO 2016/098642 (23.06.2016 Gazette 2016/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **15.12.2014 JP 2014253429**

(71) Applicant: **Toyo Seikan Group Holdings, Ltd.**
**Shinagawa-ku**
**Tokyo 141-8627 (JP)**

(72) Inventors:
- **YOSHIKAWA, Seishi**
  **Yokohama-shi**
  **Kanagawa 240-0062 (JP)**
- **KATAYAMA, Tsutaki**
  **Yokohama-shi**
  **Kanagawa 240-0062 (JP)**

(74) Representative: **J A Kemp**
**14 South Square**
**Gray's Inn**
**London WC1R 5JJ (GB)**

(54) **POLYOXALATE COPOLYMER**

(57) A polyoxalate copolymer that includes main ester units of oxalate linked together like a straight chain, and branched ester copolymer units derived from a trifunctional or more highly functional alcohol or an acid. The polyoxalate copolymer initially undergoes the hydrolysis in a suppressed manner.

Fig. 1

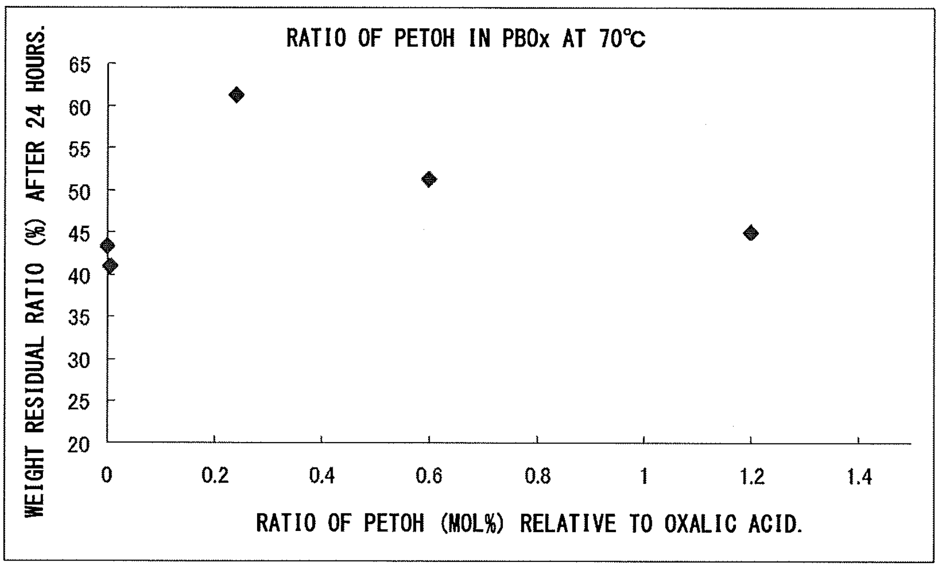




Printed by Jouve, 75001 PARIS (FR)

**Description**

Technical Field:

This invention relates to a polyoxalate copolymer. Specifically, the invention relates to a polyoxalate copolymer that can be favorably used as an additive to be added to a dispersion solution for drilling, and to a drilling method that uses an aqueous dispersion solution to which the polyoxalate copolymer has been added.

Background Art:

Hydrolysable resins as represented by polyoxalate and polylactic acid feature their excellent biodegradable properties, and have been studied for their use as substitutes for various plastic materials in a variety of fields. In some areas, they have already been put into practical use.

In recent years, further, it has been proposed to use them as additives for use in a solution for drilling in extracting the underground resources (see patent documents 1 to 3).

To extract the underground resources, there has now been widely employed, for example, an ore chute drilling method called hydraulic fracturing method. This drilling method consists of highly pressurizing the drilling solution filled in the ore chute to form cracks (fractures) in the vicinities of the ore chute to thereby improve permeability in the vicinities of the ore chute (for easy flow of the fluid) in an attempt to increase the effective sectional area through which the resources such as oils and gases flow into the ore chute and, therefore, in order to improve productivity of the ore chute. The drilling solutions of this kind are also called fracturing fluids. In the past, a viscous fluid such as jelly gasoline had been used. In recent years, however, as the shale gas or the like gas has now been extracted from the shale layer that exists in relatively shallow places and by taking the effects on the environment into consideration, it is becoming a practice to use an aqueous dispersion solution obtained by dissolving or dispersing polymer particles in water. As the polymer, there have been proposed hydrolysable resins such as polyoxalate and polylactic acid.

That is, the drilling solution obtained by dispersing the hydrolysable resin particles in water is filled in the ore chute and is pressurized. Namely, the resin particles permeate into the vicinities of the ore chute and work as a filler (sealing material) for the cracks (fractures) that have been formed already making it possible to temporarily and effectively interrupt the flow passage of resources such as gases and oils.

To form cracks in the ore chute, in general, a preliminary blasting called perforation is executed in the horizontal ore chute. Due to the preliminary blasting, there are formed relatively large cracks as well as a number of small cracks deep in the ore chute. Thereafter, the drilling solution (fracturing fluid) is flown with pressure into the ore chute. Namely, the fluid flows into the cracks thereby exerting load to the cracks; i.e., the cracks grow into sizes large enough for suitably extracting the resources. Here, by temporarily closing the cracks that are formed first with the hydrolysable resin particles, the cracks can be, further, effectively formed due to the subsequently applied pressure of the fluid. The additive added to the fluid for temporarily closing the cracks is called diverting agent.

The hydrolysable particles undergo the hydrolysis due to water and enzyme in the ground, and extinguish. Therefore, there is no need of removing the hydrolysable particles in a subsequent step, and the ore chute can be efficiently drilled.

Here, the temperature in the ore chute differs depending upon the depth thereof; i.e. , the temperature range is as wide as from 40°C to 200°C in the ore chute where the cracks are formed for extracting the resources. Therefore, the optimum hydrolysable resin that is used in the ore chute varies depending upon the temperature in the ore chute.

Among the hydrolysable resins, the polyoxalate is highly hydrolysable as compared to the polylactic acid, and is expected to be used in a low temperature zone (i.e. , not higher than 80°C). The polyoxalate can be used alone. Upon being blended with the polylactic acid, however, the polyoxalate exhibits the function of accelerating the rate of hydrolysis of the polylactic acid. Namely, the polyoxalate is a hydrolysable resin that is very easy to use.

However, the polyoxalate is accompanied by its specific problem in regard to the workability when it is used being added to water. Namely, the polyoxalate has such a low waterproof property that the particles thereof undergo the hydrolysis in water within short periods of time. Therefore, the polyoxalate decomposes and melts while it is still on the ground or fails to fully exhibit the function required for the particles thereof in the ore chute.

The polyoxalate has already been studied concerning the methods of polymerization and mechanical properties, but has not almost been studied concerning its waterproof property.

Prior Art Documents:

Patent Documents:

Patent document 1: JP-A-2014-134090

Patent document 2: JP-A-2014-134091

Patent document 3: JP-A-2014-177618

Outline of the Invention:

Problems that the Invention is to Solve:

The present inventors have conducted experiments extensively concerning the waterproof property of the polyoxalate, and discovered that upon introducing a branched structure into a polymer thereof, its initially hydrolyzing property can be suppressed. As a result, therefore, it was made possible to prevent particles stemming from the initially hydrolyzed product thereof from melt-adhering or to suppress the particle properties from deteriorating, and have thus completed the invention.
It is, therefore, an object of the present invention to provide a polyoxalate copolymer of which initially hydrolyzing property has been suppressed.
Another object of the present invention is to provide a polyoxalate copolymer of which initially hydrolyzing property has been suppressed and which can be favorably used as an additive that is to be added to an aqueous dispersion solution for drilling.

Means for Solving the Problems:

According to the present invention, there is provided a polyoxalate copolymer that includes main ester units of oxalate linked together like a straight chain, and branched ester copolymer units derived from a trifunctional or more highly functional alcohol or an acid.
In the polyoxalate copolymer of the present invention, it is desired that:

(1) The branched ester copolymer units are contained in an amount of 0.01 to 1.0% by mol per the main ester units of oxalate;
(2) An amount of insoluble-solvent components is 1 to 70% by mass as measured with the dichloromethane at 23°C;
(3) The main ester units of oxalate are derived from an oxalic acid or an alkyl oxalate and an ethylene glycol or a butylene glycol;
(4) The polyhydric alcohol used for forming the branched ester copolymer units is a pentaerythritol;
(5) The crystallization temperature when the temperature is lowering down is in a range of 30 to 70°C as measured by the DSC;
(6) When the polyoxalate copolymer is thrown into water of 70°C and is held therein, the initial hydrolysis delay index $\tau$ represented by the following formua,

$$\text{Initial hydrolysis delay index } \tau = Vt/Vf$$

wherein,

Vt is a rate of hydrolysis from when 12 hours have passed until when 24 hours have passed after having been thrown into water, and
Vf is a rate of hydrolysis from when thrown into water until when 12 hours have passed,

is not less than 0.7; and
(7) The polyoxalate copolymer is used as an additive that is to be added to an aqueous dispersion for drilling.

According to the present invention, further, there is provided a drilling method comprising the step of preparing an aqueous dispersion solution for drilling by adding the polyoxalate copolymer into water, introducing the dispersion solution with pressure into an ore chute, and feeding the oxalate copolymer into the cracks that have been formed in the ore chute.

Effects of the Invention:

The polyoxalate copolymer of the present invention has a branched structure that is introduced into the molecules thereof and, therefore, has its initially hydrolyzing property suppressed. As demonstrated in Examples appearing later, for example, when the polyoxalate copolymer is thrown into water, the rate of its hydrolysis from when it is thrown into water until 12 hours have passed is very smaller than that of the polyoxalate into which the branched structure has not been introduced (often called unmodified polyoxalate). Moreover, the rate of hydrolysis is nearly the same as that of the unmodified polyoxalate during the period of from when 12 hours have passed until when 24 hours have passed after it has been thrown into water.

According to the present invention, therefore, abrupt hydrolysis is suppressed on the ground effectively alleviating the melt-adhesion of particles stemming from the hydrolyzed product. Moreover, the hydrolyzing property over the long term is nearly the same as that of the unmodified polyoxalate. Therefore, properties required for the particles are also effectively preserved. Upon being thrown into an aqueous medium such as water so as to be used in the form of an aqueous dispersion solution for drilling, therefore, the polyoxalate copolymer can be fed into the cracks in the ore cute maintaining stability since its hydrolyzing property had been suppressed on the ground. Accordingly, the particulate shape can be maintained for a predetermined period of time, and the functions of the particles (closing the cracks, preventing the cracks from collapsing, etc.) can be effectively exhibited.

In the present invention, the reason has not been clarified yet why the polyoxalate copolymer exhibits enhanced initially hydrolyzing property yet maintaining hydrolysable property over extended periods of time if a branched structure is introduced into the molecules thereof. The present inventors, however, consider it as described below.

That is, by introducing the branched structure, the particles of the polyoxalate copolymer become dense, and water permeates little into the particles. Accordingly, the particles absorb water less and are suppressed from undergoing the initial hydrolysis. Therefore, even if the temperature is elevated on the ground or even if the temperature is elevated in the pipe due to the friction by the fluid that is moving, it is presumed that the particles of the initially hydrolyzed product are effectively prevented from melt-adhering together or clogging the pipe. Besides, the particles do not swell and do not clog the pipe. Here, the hydrolysis is not completely suppressed but takes place gradually with the passage of time. If the hydrolysis takes place to a certain degree, the branched structure is destroyed. Thereafter, the hydrolysis takes place sharply. As a result, it is considered that the long-term hydrolyzing property is maintained on a level equivalent to that of the unmodified polyoxalate.

Brief Description of the Drawing:

[Fig. 1] A diagram illustrating a correlation between the amount of a branching agent (pentaerythritol) and the hydrolyzing property.

Modes for Carrying Out the Invention:

The polyoxalate copolymer of the present invention has a branched structure that is introduced into the molecules thereof, and includes main ester units of oxalate linked together like a straight chain and branched ester copolymer unit derived from a trifunctional or more highly functional alcohol or an acid. Usually, the polyoxalate copolymer has a weight average molecular weight of 5,000 to 200,000.

The main ester units of oxalate linked together like a straight chain are represented by the following formula (1):

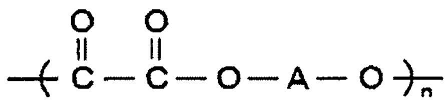

(1)

wherein, n is a positive number and A is a divalent organic group.

In the main ester unit, the divalent organic group A is an oxalic diester or is an organic residue of dialcohol capable of forming an ester with the oxalic acid.

As the oxalic diester used for introducing the main ester unit, there can be preferably used a dialkyl oxalate, or alkyl groups having 1 to 4 carbon atoms, such as dimethyl oxalate, diethyl oxalate and propyl oxalate. Most desirably, there are used dimethyl oxalate and diethyl oxalate from the standpoint of ester interchange property.

As the dialcohol used for introducing the main ester unit, there can be exemplified ethylene glycol, 1,3-propanediol, propylene glycol, butanediol, hexanediol, octanediol, dodecanediol, neopentyl glycol, bisphenol A, and cyclohexanedimethanol.

Among them, from the standpoint of excellent long-term hydrolyzing property and less effect upon the environment, it is desired to use an aliphatic dialcohol and, specifically, a straight-chain divalent alcohol, such as ethylene glycol, propylene glycol, butane diol, hexanediol, octanediol or dodecanediol. Specifically, it is most desired to use the butanediol from such a standpoint that introduction of the branched ester copolymer unit is highly effective in suppressing the initial hydrolyzing property.

Further, the main ester unit may have been copolymerized with a dicarboxylic acid (e.g., cyclohexanedicarboxylic acid or phthalic acid) having an aliphatic ring or an aromatic ring in an amount in a range in which it does not impair the desired hydrolyzing property, e.g., in an amount of not more than 20% by mol and, specifically, not more than 5% by mol per the oxalic acid.

Further, the branched ester copolymer unit is represented by the following formula (2) or (3):

P-(O-CO-CO)-r (2)

Q-(O-A-O)-r (3)

wherein,

P is a trifunctional or more highly functional alcohol residue used for introducing the branched ester copolymer unit,
Q is a trifunctional or more highly functional alcohol residue used for introducing the branched ester copolymer unit,
A is a divalent organic group like that of the above formula (1), and
r is a valence number of trifunctional or more highly functional alcohol or acid.

Namely, upon introducing the branched copolymer units into the straight-chain main ester units, there is formed the branched structure. Therefore, the polyoxalate copolymer of the present invention maintains the long-term hydrolyzing property of a high level yet suppressing the initially hydrolyzing property.

In the branched ester copolymer unit (hereinafter often simply called branched unit), it is desired that not more than 18 carbon atoms are possessed by either the residue (P in the formula (2)) of the trifunctional or more highly functional alcohol or the residue (Q in the formula 3)) of the trifunctional or more highly functional acid. This is because if these residues P and Q are long chains, then a decreased effect is obtained for lowering the initially hydrolyzing property.

There can be exemplified the following compounds as the trifunctional or more highly functional alcohol or as the trifunctional or more highly functional acid having the residue with the above-mentioned number of carbon atoms. Trifunctional or more highly functional alcohol:

Polyfunctional aliphatic alcohols such as triols like glycerin, trimethylolmethane, trimethylolethane and trimethylolpropane, and tetraols like tetramethylolmethane (pentaerythritol).

Trifunctional or more highly functional acid:

Aliphatic tricarboxylic acids such as propanetricarboxylic acid and cyclohexanetricarboxylic acid and aliphatic tetracarboxylic acids such as ethylenetetracarboxylic acid and the like;
Aromatic tricarboxylic acids such as trimellitic acid and the like;
Aromatic tetracarboxylic acids such as benzenetetracarboxylic acid, biphenylteracarboxylic acid, benzophenonetetracarboxylic acid; and
Anhydrides of the above acids.

In the present invention, from the standpoint of not losing the long-term hydrolyzing property, it is particularly desired that the branched ester copolymer unit is introduced by using the trifunctional or more highly functional alcohol. For example, it is desired that the straight-chain ester copolymer units are introduced with the pentaerythritol.

It is desired that the branched units are introduced in an amount of 0.01 to 1.0% by mol per the main ester units that are linked together like a straight chain. If the amount of the branched ester copolymer units is small, the effect becomes small for lowering the initially hydrolyzing property. On the other hand, introduction of the branched units in unnecessarily large amounts results in a decrease in the molecular weight of the straight-chain main ester units that are connected to the branched units. Accordingly, despite of introducing the branched structure, the effect becomes small for suppressing the initially hydrolyzing property. Besides, the particles contain much components that are insoluble in the solvent (gel percentage increases), formability decreases to a large degree, and it becomes difficult to form the polyoxalate copolymer into particles thereof.

The polyoxalate copolymer of the present invention to which the above-mentioned branched structure has been introduced is prepared based on a conventional polycondensation reaction by using an oxalic acid source (oxalic acid or oxalic acid ester) for forming the straight-chain main ester units, a divalent alcohol component, a polyhydric alcohol

component or a polybasic acid component for forming the branched units, and a catalyst, in such a manner that the branched units are formed at the above-mentioned ratio.

As the catalyst, here, there can be representatively used a compound of P, Ti, Ge, Zn, Fe, Sn, Mn, Co, Zr, V, Ir, La, Ce, Li, Ca or Hf. Specifically, there can be used an organotitanium compound or an organotin compound, such as titanium alkoxide, dibutyltin dilaurate, or butyltin hydroxide oxide hydrate because of their high degrees of activity.

In conducting the polycondensation reaction, there may be added, as required, a heat resisting agent to prevent the deterioration due to heat. To discontinue the polymerization, further, a catalyst deactivating agent may be added.

After the polyoxalate comprising the straight-chain main ester units has been synthesized, the polyfunctional alcohol or the polybasic aid component for forming the branched units is added thereto in a subsequent step, and the polycondensation reaction or the ester interchange reaction is carried out to prepare the desired polyoxalate copolymer of the present invention.

In the subsequent step, while the straight-chain polyoxalate is being melted by using an extruder, the trifunctional or more highly functional component may be added thereto and melted together. The polyfunctional component can also be thus introduced.

In the thus obtained polyoxalate copolymer, the branched units have been introduced as the copolymer ester units. Here, by adjusting the amount of introduction thereof, an amount of insoluble-solvent components (gel percentage) can be adjusted to lie in a range of 1 to 70% by mass, preferably, 10 to 70% by mass and, more preferably, 30 to 70% by mass as measured in dichloromethane at 23°C to advantageously lower the initially hydrolyzing property. As described earlier, the effect for lowering the initially hydrolyzing property becomes small either when the branched units are introduced in a small amount and the amount of insoluble-solvent components is smaller than the above range or when the branched units are introduced in large amounts and the amount of insoluble-solvent components is larger than the above range.

Further, the polyoxalate copolymer of the present invention exhibits decreased initially hydrolyzing property due to the introduction of the branched structure. As demonstrated in Examples appearing later, for example, when the polyoxalate copolymer is thrown into water of 70°C and is held therein, there is exhibited a large initial hydrolysis delay index $\tau$ as represented by the following formula,

$$\text{Initial hydrolysis delay index } \tau = Vt/Vf$$

wherein,

Vt is a rate of hydrolysis from when 12 hours have passed until when 24 hours have passed after having been thrown into water, and

Vf is a rate of hydrolysis from when thrown into water until when 12 hours have passed.

Namely, the larger the value, the rate of hydrolysis from when 12 hours have passed until when 24 hours have passed after it is thrown into water, becomes larger than the rate of hydrolysis of from when it is thrown into water until when 12 hours have passed. This means that the initially hydrolyzing property is suppressed.

For example, if the branched copolymer ester unit is introduced by using the pentaerythritol, the initial hydrolysis delay index $\tau$ is not less than 0.5. In particular, if the butanediol (butylene glycol) is used as the dialcohol for introducing the straight-chain main ester units, the initial hydrolysis delay index $\tau$ is as very large as not less than 0. 7.

After thrown into water, the polyoxalate copolymer of the invention maintains a large rate of hydrolysis until 96 hours have passed, say, not less than 50%. This means that the polyoxalate copolymer maintains the hydrolyzing property of a high level for a long period of time and, after the passage of a predetermined period of time, quickly undergoes the hydrolysis and extinguishes.

It is, further, desired that the polyoxalate copolymer of the present invention has been crystallized by the heat treatment such as of vacuum heating after the polymer has been prepared, and that the crystallization temperature (Tc2) when the temperature is lowering down is in a range of, for example, 30 to 70°C as measured by the DSC. The polyoxalate copolymer having good crystallinity also has low water-absorbing property. This is desirable in effectively avoiding the polyoxalate copolymer from swelling due to the absorption of water when it is thrown into water and, specifically, in effectively suppressing the clogging in the pumps and in the pipes caused by swelling.

As described above, the polyoxalate copolymer of the invention exhibits the initially hydrolyzing property that is effectively lowered, features high water-proof property, and maintains the hydrolyzing property of a high level over a long period of time. In particular, very excellent properties are exhibited by the polyoxalate copolymer of which the straight-chain main ester units are formed by the oxalic acid or the alkyl oxalate and ethylene glycol or butylene glycol (most desirably, butylene glycol). More superior properties are exhibited by the polyoxalate copolymer of which the

branched ester copolymer units are formed by the pentaerythritol.

The polyoxalate copolymer of the present invention is obtained in the form of granules of predetermined grain sizes relying on a known forming method such as mechanical milling, milling by using a coolant, freeze-milling or chemical milling by being dissolved in a solution. The polyoxalate copolymer is favorably used in an application where it is thrown in the form of granules of predetermined grain size in water as, for example, an additive for a dispersion solution for drilling.

In the application where it is used as the additive, further, the polyoxalate copolymer can also be used being mixed with any other biodegradable resins such as aliphatic polyester, polyvinyl alcohol (PVA) and celluloses so far as they do not impair the properties thereof.

As the aliphatic polyester, there can be exemplified polylactic acid (PLA) resin and derivatives thereof, polybutylene succinate (PBS) resin and derivatives thereof, polycaprolactone (PHB) and derivatives thereof, polyethylene adipate (PEA), polyglycolic acid (PGA), polytetramethylene adipate, and condensates of diol and dicarboxylic acid.

As celluloses, there can be exemplified methyl cellulose, ethyl cellulose, acetyl cellulose and the like.

The other biodegradable resins may be used in a single kind, in the form of copolymers or in a combination of two or more kinds. As the components for forming copolymers, there can be exemplified polyhydric alcohols such as ethylene glycol, propylene glycol, butanediol, octanediol, dodecanediol, neopentyl glycol, glycerin, pentaerythritol, sorbitan, bisphenol A, and polyethylene glycol; dicarboxylic acids such as succinic acid, adipic acid, sebacic acid, glutaric acid, decanedicarboxylic acid, cyclohexanedicarboxylic acid, terephthalic acid, isophthalic acid and anthracenedicarboxylic acid; hydroxycarboxlic acid such as glycolic acid, L-lactic acid, D-lactic acid, hydroxypropionic acid, hydroxybutyric acid, hydroxyvaleric acid, hydroxycaproic acid, mandelic acid, and hydroxybenzoic acid; and lactones such as glycolide, caprolactone, butylolactone, valerolactone, propiolactone, and undecalactone.

The polyoxalate copolymer of the present invention works to improve its hydrolyzing property particularly when it is mixed with a polylactic acid, such as a polymer that is less hydrolysable than the polyoxalate copolymer.

There is no particular limitation on the polylactic acid provided it is a polyester obtained by polymerizing the lactic acid. There can be used, for example, a homopolymer, a copolymer or a blended polymer of polylactic acid. The lactic acid that is used for the polymerization of the polylactic acid may be either the L-isomer or the D-isomer, or a mixture of the L-isomer and the D-isomer.

## EXAMPLES

### <Method of preparing powders>

Powders of polymers used in Examples and Comparative Examples were obtained by milling the pellets of sample polymers by using a milling machine, IMF-800DG, manufactured by Iwatani Sangyo Co. Namely, the powders were those that have passed in the first time through a mesh of a mesh size of 1 mm.

### <Evaluating the hydrolyzing property>

300 Milligrams (initial weight) of a sample powder and 40 ml of distilled water were put into a 50-ml polypropylene (PP) vial which was then stored still in an oven heated at 70°C. The samples were taken out after the passage of 12 hours, 24 hours, 48 hours and 96 hours, respectively, and were dried to measure their weights.

From the weight after the passage of 96 hours, the ratio of hydrolysis after the passage of 96 hours was found in compliance with the following formula.

$$[(\text{Initial weight} - \text{weight after 96 hours have passed}) / \text{initial weight}] \times 100$$

### <Evaluating the effect for delaying the initial hydrolysis (initial hydrolysis delay index $\tau$)>

The initial hydrolysis delay index $\tau$ was found in compliance with the following formula from the weights after the passage of times in evaluating the hydrolyzing properties at 70°C.

$$\text{Initial hydrolysis delay index } \tau = Vt/Vf$$

wherein,

Vt is a rate of hydrolysis from when 12 hours have passed until when 24 hours have passed after having been thrown into water, and
Vf is a rate of hydrolysis from when thrown into water until when 12 hours have passed.

The rate of hydrolysis from when thrown into water until when 12 hours have passed, was found in compliance with,

(Initial weight (300 mg) - weight after 12 hours have passed)/12

The rate of hydrolysis from when 12 hours have passed until when 24 hours have passed was found in compliance with,

(Weight after 12 hours have passed - weight after 24 hours have passed)/12

<Amount of insoluble-solvent components (gel percentage)>

0.5 Grams of a sample polymer and 15 ml of dichloromethane were put into a 20-ml vial and were stored still for 12 hours so as to be dissolved.
The solution was passed through a sieve of 20 mesh to remove the gel and was cast onto a Teflon (registered trademark) laboratory dish (10 cm in inner diameter) to form a film thereon. After dried, the weight was measured to find the amount of insoluble-solvent components in compliance with the following formula,

100 x [0.5 - (weight of the film free of gelly components)]/0.5

<Preparation of PBOx (reference polymer 1)>

Into a 1-litter separable flask equipped with a mantle heater, a thermometer, a stirrer, a nitrogen introduction tube and a distill-off column, there were introduced:

oxalic acid, 180 g (2 moles),
1,4-butanediol, 216 g (2.4 moles), and dibutyltin dilaurate, 0.24 ml,

and the liquid temperature in the flask was elevated in a nitrogen stream up to 120°C to conduct the polymerization under normal pressure.
After the condensed water started distilling off, the liquid temperature was elevated little by little up to 150°C to conduct the polymerization under normal pressure. Finally, there was obtained 72 ml of a distillate.
Thereafter, the liquid temperature in the flask was elevated stepwise up to 230°C, and the polymerization was conducted under reduced pressure of 0.1 to 0.8 kPa. The obtained polymer was taken out, cooled with liquid nitrogen, and was milled and granulated by using a crusher.
The obtained polybutylene oxalate (PBOx) possessed the following properties.

Melting point: 105°C
Crystallization temperature (Tc2) when the temperature is lowered down: 49°C
Number average molecular weight Mn: 24500
Weight average molecular weight Mw: 85800

<Preparation of PEOx (reference polymer 2)>

Into a 1-litter separable flask equipped with a mantle heater, a thermometer, a stirrer, a nitrogen introduction tube and a distill-off column, there were introduced:

dimethyl oxalate, 472 g (4 moles),
ethylene glycol, 297 g (4.8 moles), and
dibutyltin dilaurate, 0.48 ml,

and the liquid temperature in the flask was elevated in a nitrogen stream up to 120°C to conduct the polymerization under normal pressure.

After the methanol started distilling off, the liquid temperature was elevated little by little up to 200°C to conduct the polymerization under normal pressure. Finally, there was obtained 260 ml of a distillate.

Thereafter, the liquid temperature in the flask was maintained at 200°C, and the polymerization was conducted under reduced pressure of 0.1 to 0.8 kPa. The obtained polymer (polyethylene oxalate) was taken out, granulated by using a crusher, and was heat-treated in vacuum at 120°C for 2 hours so as to be crystallized.

The obtained polyethylene oxalate (PEOx) possessed the following properties.

Melting point: 180°C
Number average molecular weight Mn: 37400
Weight average molecular weight Mw: 75500

<Measuring the melting points of the polymers and crystallization temperatures thereof when the temperature is lowered down>

Found from the peak top relying on the differential thermometry. The melting point was found from the endothermic peak top of when the temperature is elevated, and the crystallization temperature at the time of lowering the temperature was found from the exothermic peak top of when the temperature is lowered.

Differential scanning calorimeter:
DSC 6220 manufactured by Seiko Instruments Co.
Sample preparation: amounts of samples, 5 to 10 mg.
Measuring conditions:
Measured in a nitrogen atmosphere while elevating the temperature at a rate of 10°C/min. over a range of 0°C to 230°C. Thereafter, measured from 230°C down to 0°C while lowering the temperature at a rate of 10°C/min.

<Measuring the molecular weight of PBOx>

Apparatus: Gel permeation chromatograph GPC
Detector: Differential refractive index detector RI
Column: Super-Multipore HZ-M (two units)
Solvent: Chloroform
Flow rate: 0.5 mL/min.
Column temperature: 40°C

Preparation of samples:

3 Milliliters of a solvent was added to about 10 mg of a sample, and the mixture thereof was left to stand at room temperature. After having confirmed with the naked eye that the sample had been dissolved, the solvent was filtered using a 0.45 $\mu$m filter. Here, a polystyrene was used as the standard.

<Measuring the molecular weight of PEOx>

Apparatus: Gel permeation chromatograph GPC
Detector: Differential refractive index detector RI
Column: Shodex HFIP-LG (one unit), HFIP-806M (two units) (Showa Denko Co.)
Solvent: Hexafluoroisopropanol (to which 5 mM sodium trifluoroacetate has been added)
Flow rate: 0.5 mL/min.
Column temperature: 40°C

Preparation of samples:

5 Milliliters of a solvent was added to about 1.5 mg of a sample, and the mixture thereof was mildly stirred at room temperature (sample concentration of about 0.03%). After having confirmed with the naked eye that the sample had been dissolved, the solvent was filtered using a 0.45 $\mu$m filter. Here, a polymethylmethacrylate was used as the standard.

<Example 1>

By using the following recipe, a polybutylene oxalate copolymer (PBOx copolymer) was synthesized through the same operation as that for synthesizing the PBOx.
Oxalic acid, 180 g (2 moles),
1,4-Butanediol, 216 g (2.4 moles), and Pentaerythritol, 0.65 g (0.0048 moles).
The obtained PBOx copolymer possessed the following properties.

Melting point: 105°C
Crystallization temperature (Tc2) when
the temperature is lowered down: 47°C
Amount of insoluble-solvent components: 40%
Ratio of hydrolysis after 96 hours: 76%
Initial hydrolysis delay index $\tau$: 1.9

<Example 2>

By using the following recipe, a polybutylene oxalate copolymer (PBOx copolymer) was synthesized through the same operation as that for synthesizing the PBOx.
Oxalic acid, 180 g (2 moles),
1,4-Butanediol, 216 g (2.4 moles), and
Pentaerythritol, 1.6 g (0.012 moles).
The obtained PBOx copolymer possessed the following properties.

Melting point: 105°C
Amount of insoluble-solvent components: 70%
Ratio of hydrolysis after 96 hours: 80%
Initial hydrolysis delay index $\tau$: 1.9

<Example 3>

By using the following recipe, a polybutylene oxalate copolymer (PBOx copolymer) was synthesized through the same operation as that for synthesizing the PBOx.
Oxalic acid, 180 g (2 moles),
1,4-Butanediol, 216 g (2.4 moles), and
Glycerin, 0.442 g (0.0048 moles).
The obtained PBOx copolymer possessed the following properties.

Melting point: 105°C
Amount of insoluble-solvent components: 0%
Ratio of hydrolysis after 96 hours: 89%
Initial hydrolysis delay index $\tau$: 0.73

<Example 4>

By using the following recipe, a polyethylene oxalate copolymer (PEOx copolymer) was synthesized through the same operation as that for synthesizing the PEOx.
Dimethyl oxalate, 212 g (1.8 moles),
Ethylene glycol, 134 g (2.16 moles), and
Pentaerythritol, 0.59 g (0.0043 moles).
The obtained PEOx copolymer possessed the following properties.

Ratio of hydrolysis after 96 hours: 100%
Initial hydrolysis delay index $\tau$: 0.50

<Reference Example 1>

The PBOx (reference polymer 1) synthesized above possessed the following properties.

Melting point: 105°C
Crystallization temperature when
the temperature is lowered down (TC2): 49°C
Amount of insoluble-solvent components: 0%
Ratio of hydrolysis after 96 hours: 76%
Initial hydrolysis delay index $\tau$: 0.6

<Reference Example 2>

The PEOx (reference polymer 2) synthesized above possessed the following properties.

Melting point: 180°C
Amount of insoluble-solvent components: 0%
Ratio of hydrolysis after 96 hours: 91%
Initial hydrolysis delay index $\tau$: 0.21

<Reference Example 3>

By using the following recipe, a polybutylene oxalate copolymer (PBOx copolymer) was synthesized through the same operation as that for synthesizing the PBOx.
Oxalic acid, 180 g (2 moles),
1,4-Butanediol, 216 g (2.4 moles), and
Pentaerythritol, 0.016 g (0.00012 moles).
The obtained PBOx copolymer possessed the following properties.

Melting point: 105°C
Amount of insoluble-solvent components: 0%
Ratio of hydrolysis after 96 hours: 91%
Initial hydrolysis delay index $\tau$: 0.60

<Reference Example 4>

By using the following recipe, a polybutylene oxalate copolymer (PBOx copolymer) was synthesized through the same operation as that for synthesizing the PBOx.
Oxalic acid, 180 g (2 moles),
1,4-Butanediol, 216 g (2.4 moles), and Pentaerythritol, 3.2 g (0.024 moles).
The obtained PBOx copolymer possessed the following properties.

Melting point: 105°C
Amount of insoluble-solvent components: 70%
Ratio of hydrolysis after 96 hours: 91%
Initial hydrolysis delay index $\tau$: 0.60

<Reference Example 5>

By using the following recipe, a polybutylene oxalate copolymer (PBOx copolymer) was synthesized through the same operation as that for synthesizing the PBOx.
Oxalic acid, 180 g (2 moles),
1,4-Butanediol, 216 g (2.4 moles), and Glycerin, 1.1 g (0.012 moles).
The obtained PBOx copolymer possessed the following properties.

Melting point: 105°C
Amount of insoluble-solvent components: 0%
Ratio of hydrolysis after 96 hours: 75%
Initial hydrolysis delay index $\tau$: 0.48

<Reference Example 6>

By using the following recipe, a polyethylene oxalate copolymer (PEOx copolymer) was synthesized through the same operation as that for synthesizing the PEOx.
Dimethyl oxalate, 177 g (1.5 moles),
Ethylene glycol, 111 g (1.8 moles), and
Pentaerythritol, 1.224 g (0.0009 moles).
The obtained PEOx copolymer possessed the following properties.

Ratio of hydrolysis after 96 hours: 91%
Initial hydrolysis delay index $\tau$: 0.23

Summarizing the above results, there were evaluated the amounts of insoluble-solvent components, ratios of hydrolysis after 96 hours and initial hydrolysis suppressing capabilities to be as shown in Table 1.
The amounts of insoluble-solvent components were evaluated to be ○ when they were less than 50%, to be Δ when they were not less than 50% but was less than 80%, and to be × when they were not less than 80%.
The ratios of hydrolysis after 96 hours were evaluated to be ○ when they were not less than 50%.
The initial hydrolysis suppressing capabilities, in the case of the PBOx copolymers, were evaluated based on Reference Example 1. Namely, the initial hydrolysis suppressing capability was evaluated to be × when its ratio was less than 1 times, to be Δ when its ratio was 1.1 times to 1.5 times, and to be ○ when its ratio was not less than 1.6 times relative to Reference Example 1.
In the case of the PEOx copolymers, Reference Example 2 was based upon. Namely, the initial hydrolysis suppressing capability was evaluated to be × when its ratio was less than 1 times, to be Δ when its ratio was 1.1 times to 1.5 times, and to be ○ when its ratio was not less than 1.6 times relative to Reference Example 2.

Table 1

| | Content of crosslinked product | Ratio of hydrolysis after 96 hours | Initial hydrolysis delay effect |
|---|---|---|---|
| Example 1 | ○ | ○ | ○ |
| Example 2 | Δ | ○ | ○ |
| Example 3 | ○ | ○ | Δ |
| Example 4 | - | ○ | ○ |
| Ref. Example 1 | ○ | ○ | reference |
| Ref. Example 2 | ○ | ○ | reference |
| Ref. Example 3 | ○ | ○ | × |
| Ref. Example 4 | Δ | ○ | × |
| Ref. Example 5 | ○ | ○ | × |
| Ref. Example 6 | - | ○ | × |

From the above experimental results, the PBOx copolymers were examined for their amounts of pentaerythritol (PETOH) relative to the oxalic acid, and for their ratios of hydrolysis at 70°C after 24 hours have passed as shown in Fig. 1.

## Claims

1. A polyoxalate copolymer that includes main ester units of oxalate linked together like a straight chain, and branched ester copolymer units derived from a trifunctional or more highly functional alcohol or an acid.

**2.** The polyoxalate copolymer according to claim 1, wherein the branched ester copolymer units are contained in an amount of 0.01 to 1.0% by mol per the main ester units of oxalate.

**3.** The polyoxalate copolymer according to claim 1, wherein an amount of insoluble-solvent components is 1 to 70% by mass as measured with dichloromethane at 23°C.

**4.** The polyoxalate copolymer according to claim 1, wherein the main ester units of oxalate are derived from an oxalic acid or an alkyl oxalate and ethylene glycol or butylene glycol.

**5.** The polyoxalate copolymer according to claim 1, wherein the polyhydric alcohol used for forming the branched ester copolymer units is pentaerythritol.

**6.** The polyoxalate copolymer according to claim 1, wherein a crystallization temperature when a temperature is lowering down is in a range of 30 to 70°C as measured by the DSC.

**7.** The polyoxalate copolymer according to claim 1, wherein when the polyoxalate copolymer is thrown into water of 70°C and is held therein, the initial hydrolysis delay index $\tau$ represented by the following formula,

$$\text{Initial hydrolysis delay index } \tau = Vt/Vf$$

wherein,

Vt is a rate of hydrolysis from when 12 hours have passed until when 24 hours have passed after having been thrown into water, and
Vf is a rate of hydrolysis from when thrown into water until when 12 hours have passed,

is not less than 0.7.

**8.** The polyoxalate copolymer according to claim 1, wherein the polyoxalate copolymer is used as an additive that is to be added to an aqueous dispersion for drilling.

**9.** A drilling method comprising the step of preparing an aqueous dispersion solution for drilling by adding the polyoxalate copolymer of claim 1 into water, introducing the dispersion solution with pressure into an ore chute, and feeding the oxalate copolymer into cracks that have been formed in the ore chute.

Fig. 1

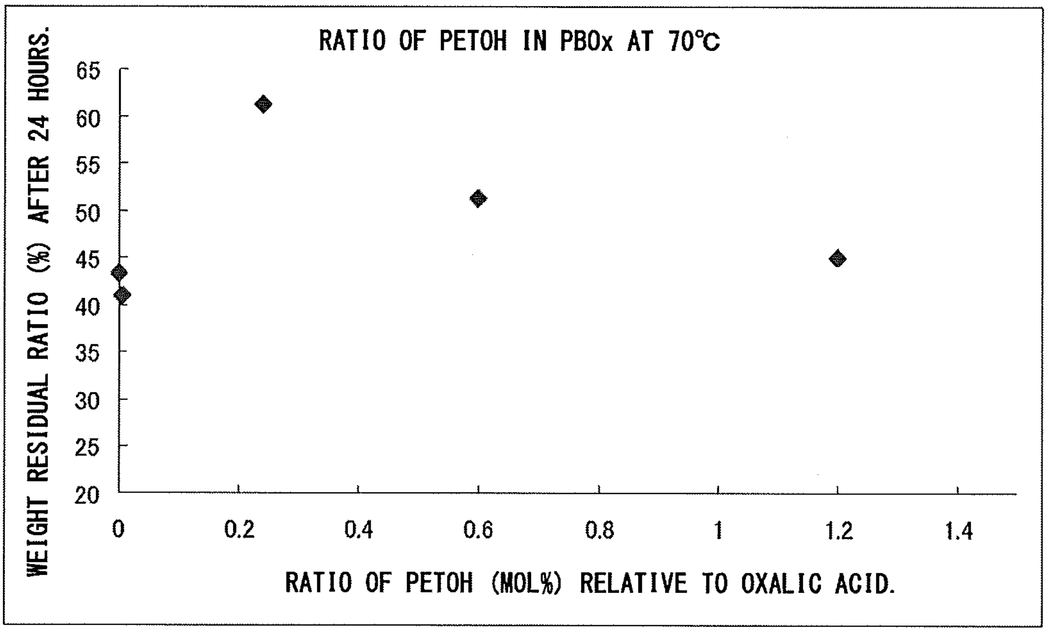
RATIO OF PETOH IN PBOx AT 70°C
WEIGHT RESIDUAL RATIO (%) AFTER 24 HOURS.
65
60
55
50
45
40
35
30
25
20
0
0.2
0.4
0.6
0.8
1
1.2
1.4
RATIO OF PETOH (MOL%) RELATIVE TO OXALIC ACID.

**INTERNATIONAL SEARCH REPORT**

International application No.
PCT/JP2015/084392

A. CLASSIFICATION OF SUBJECT MATTER
*C08G63/12*(2006.01)i, *C09K8/12*(2006.01)i, *E21B43/34*(2006.01)i

According to International Patent Classification (IPC) or to both national classification and IPC

B. FIELDS SEARCHED

Minimum documentation searched (classification system followed by classification symbols)
C08G63/12, C09K8/12, E21B43/34

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>A | JP 2004-219659 A (Kyocera Mita Corp.), 05 August 2004 (05.08.2004), claims; paragraphs [0027] to [0029]; examples (Family: none) | 1,3-7<br>2,8,9 |
| X<br>A | JP 2007-293327 A (Sanyo Chemical Industries, Ltd.), 08 November 2007 (08.11.2007), claims; paragraphs [0013] to [0015]; examples (Family: none) | 1,3-7<br>2,8,9 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 February 2016 (08.02.16) | 23 February 2016 (23.02.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No. PCT/JP2015/084392

C (Continuation). DOCUMENTS CONSIDERED TO BE RELEVANT

| Category* | Citation of document, with indication, where appropriate, of the relevant passages | Relevant to claim No. |
|---|---|---|
| X<br>A | WO 2014/091994 A1 (Toyo Seikan Kaisha, Ltd.), 19 June 2014 (19.06.2014), claims; paragraph [0018]<br>& JP 2014-134091 A & US 2015/0315891 A1<br>claims; paragraph [0034]<br>& EP 2933305 A1 & AU 2013358185 A<br>& CA 2892493 A & CN 104884566 A | 1,3-9<br>2 |
| X<br>A | JP 2014-134090 A (Toyo Seikan Kaisha, Ltd.), 24 July 2014 (24.07.2014), claims; paragraphs [0029], [0030]<br>& US 2015/0299553 A1<br>claims; paragraph [0057]<br>& WO 2014/092146 A1 & EP 2933306 A1<br>& AU 2013358061 A & CA 2892496 A<br>& CN 104854215 A | 1,3-9<br>2 |
| P,A | WO 2015/182622 A1 (Toyo Seikan Group Holdings, Ltd.), 03 December 2015 (03.12.2015), entire text; all drawings<br>(Family: none) | 1-9 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014134090 A
- JP 2014134091 A
- JP 2014177618 A